# EUROPEAN PATENT SPECIFICATION

(11) **EP 1 942 617 B1**
(45) Date of publication and mention of the grant of the patent: **27.10.2010**
(21) Application number: 07785395.0
(22) Date of filing: 01.08.2007
(51) Int. Cl.: H04L 12/56

(54) **Method, device and system for Ethernet-supported Source Specific Multicast forwarding**
Verfahren, Vorrichtung und System für quellenspezifische Multicast-Weiterleitung mit Ethernet-Unterstützung
Procédé, dispositif et système Ethernet supportant un acheminement multidiffusion à source spécifique

(30) Priority: 01.08.2006 CN 200610103987
(43) Date of publication of application: 09.07.2008
(73) Proprietor: Huawei Technologies Co., Ltd., Longgang District, Shenzhen Guangdong 518129 (CN)
(72) Inventor: LI, Qiao, Shenzhen, Guangdong 518129 (CN)
(74) Representative: Kreuz, Georg Maria
(86) International application number: PCT/CN2007/070399
(87) International publication number: WO 2008/017270

(56) References cited:
- WO-A1-03/036503
- WO-A1-2006/107693
- CN-A- 1 414 759
- CN-A- 1 483 258
- CN-A- 1 486 038
- CN-A- 1 567 839
- CN-A- 1 744 572
- JP-A- 2003 348 148
- US-B1- 6 952 421
- HOLBROOK ARASTRA H ET AL: "Source-Specific Multicast for IP; draft-ietf-ssm-arch-07.txt" IETF STANDARD-WORKING-DRAFT, INTERNET ENGINEERING TASK FORCE, IETF, CH, vol. ssm, no. 7, 4 October 2005 (2005-10-04), XP015040671 ISSN: 0000-0004

## Description

### Field of the Invention

The present invention relates to network communication technologies, and more particularly, to Source-Specific Multicast (SSM) forwarding technologies in Ethernet.

### Background of the Invention

In SSM, a host may join to a multicast group by Internet Group Management Protocol version 3 (IGMP v3). In an IGMP v3 packet, besides specifying an interested multicast group, the host also requires to report interests in receiving packets from which S (Source), i.e., specify a Source IP address (SIP). Thus, multicast packets from other Sources which the host is not interested in will not be received by the host. After applying the SSM, a router needs to forward the multicast packets based on a Multicast Source-Group address pair (S,G) to only forward the multicast packets from a specific (S, G) to the host, wherein G, denotes GIP, i.e., a multicast Group IP address, identified by a group IP address of a multicast IP packet.

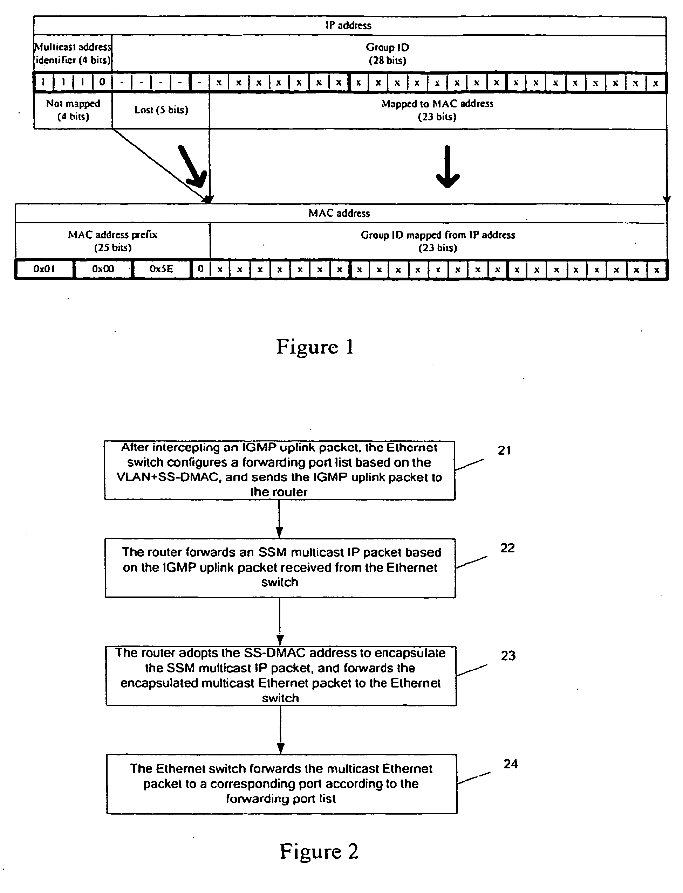

For an Ethernet switch, its traditional layer 2 multicast forwarding is performed based on a Virtual Local Area Network (VLAN) and a Destination Media Access Control (DMAC) address in an Ethernet packet. The DMAC address is obtained through mapping of the multicast IP address G into the DMAC address. The mapping of the multicast IP address G into the DMAC address includes: obtain a VLAN value of an Ethernet packet from an outgoing interface of the multicast IP packet, each outgoing interface corresponds to one VLAN; and map the multicast IP address G into the multicast DMAC address. The DMAC address only relates to a destination multicast IP address and is referred to as an Any Source DMAC (AS-DMAC) address. As shown in Figure 1, the multicast IP address has 32 bits. The high-order 4 bits of the multicast IP address are "1110", indicating that this address is a multicast IP address. The multicast MAC address has 48 bits. The high-order 24 bits are "0x01005e", bit 25 is "0" and the low-order 23 bits are the low-order 23 bits of the multicast IP address.

In a traditional mapping mechanism, the IP packets of the same multicast group G sent by different Sources S are mapped with the same VLAN+DMAC. Thus during the multicast forwarding based on the VLAN+DMAC, the Ethernet switch sends the IP packets to all the hosts subscribing to the multicast group G. Thus a host only subscribing to Source A without subscribing to Source B will also receive multicast packets from Source B. Therefore the hosts who have subscribed to different Sources in the same Group cannot be distinguished, i.e. the SSM forwarding by the Ethernet switch cannot be implemented.

A solution in the prior art for the Ethernet switch to support the SSM includes: enable the Ethernet switch to support the forwarding based on the (S, G). Specifically, add an (S, G) forwarding entry in the Ethernet switch, configure an (S, G)-based port list in the (S, G) forwarding entry through IGMP Snooping/Proxy, and forward IP packets based on the (S, G)-based port list. Since the Ethernet is capable of generating a logical topology tree through running a spanning tree protocol, the Ethernet switch need not perform Reverse Path Forwarding (RPF) check like the router during the forwarding based on the (S, G).

However, the above solution greatly increases hardware cost and software upgrade cost of a whole network and is not compatible with existing devices, which dramatically increases investments of operators. Therefore, the above solution is hard to implement.

Specifically, since the Ethernet switch is a link layer device, the forwarding only processes an Ethernet encapsulation. If the Ethernet, switch adopts the forwarding based on the (S, G), the forwarding mechanism and protocol stack of the Ethernet switch are greatly changed. Thus, the Ethernet switch needs to be changed greatly and will be highly complicated. The existing Ethernet switch can hardly satisfy technology requirements of the solution and it is impossible to implement the solution only by software upgrade.

Patent No. JP 2003348148 relates to an IP multicast control method and system for simplifying a processing so as to allow a switch section of a layer 2 switch to have only to refer to a label multicast table and capable of attaining high speed multicasting. The IP multicast control method includes that upon the receipt of a multicast with a multicast label attached thereto, the layer 2 switch 2 refers to a label multicast table 11 in a layer 3 device 1, decides a transmission port from the multicast label, deletes the multicast label and transmits the resulting multicast frame when the label multicast table 11 stores deletion of the multicast label.

HOBROOK ARASTRA H ET AL("Source-Specific Multicast for IP; draft-ietf-ssm-arch-07.txt" IETF STANDARD-WORKING-DRAFT, INTERNET ENGINEERING TASK FORCE, IETF, CH, vol.ssm, no. 7, 4 October 2005(2005-10-04), XP015040671 ISSN:0000-0004)defines an extension to the Internet network service that applies to datagram sent to SSM addresses and defines the host and router requirements to support this extension.

### Summary of the Invention

Embodiments of the present invention provide method, system and apparatus for supporting Source-Specific Multicast (SSM) forwarding in Ethernet, so as to lower device cost and upgrade cost of a whole network, provide compatibility with existing devices and reduce investment of operators.

According to one embodiment of the present invention, a method for supporting SSM forwarding in Ethernet, applicable to a multicast network including a router and an Ethernet switch, includes:
taking, by the router, a Source-Specific Destination Media Access Control address containing a Multicast Source-Group address pair consisting of a Source IP address and a multicast Group IP address as a Destination Media Access Control address when encapsulating a Source-Specific Multicast IP packet into a multicast Ethernet packet; and encapsulating the Source-Specific Destination Media Access Control address into the multicast Ethernet packet; forwarding, by the Ethernet switch, the encapsulated multicast Ethernet packet according to the Source-Specific Destination Media Access Control address.

According to another embodiment of the present invention, a system for supporting SSM forwarding in Ethernet includes: a router, configured to take a Source-Specific Destination Media Access Control address containing a Multicast Source-Group address pair consisting of a Source IP address and a multicast Group IP address as a Destination Media Access Control address when encapsulating an Source-Specific Multicast IP packet into a multicast Ethernet packet, and encapsulate the Source-Specific Destination Media Access Control address into the multicast Ethernet packet; and an Ethernet switch, configured to forward the encapsulated multicast Ethernet packet according to the Source-Specific Destination Media Access Control address.

According to another embodiment of the present invention, a router includes:
a Source-Specific Destination Media Access Control, address encapsulation unit, configured to take a Source-Specific Destination Media Access Control address containing a Multicast Source-Group address pair consisting of a Source IP address and a multicast Group IP address as a Destination Media Access Control address when encapsulating an Source-Specific Multicast IP packet into a multicast Ethernet packet, and encapsulate the Source-Specific Destination Media Access Control address into the multicast Ethernet packet.

According to another embodiment of the present invention, an Ethernet switch includes:
a storage unit, configured to store a corresponding relationship between a Multicast Source-Group address pair consisting of a Source IP address and a multicast Group IP address, and a Source-Specific Destination Media Access Control address; a forwarding port list configuration unit, configured to determine a Source-Specific Destination Media Access Control address corresponding to a Source IP address and a multicast Group IP address contained in an intercepted Internet Group Management Protocol uplink packet based on an Internet Group Management Protocol uplink packet and the corresponding relationship between the Multicast Source-Group address pair and the Source-Specific Destination Media Access Control address, and configure a forwarding port list based on a Virtual Local Area Network identifier and the Source-Specific Destination Media Access Control address.

By applying the solution provided by embodiments of the present invention, it is easy to enable the Ethernet switch to support the SSM forwarding and only forwarding components of an edge router need to be modified to support the SSM forwarding. The solution provided by embodiments of the present invention lowers device cost and upgrade cost of the whole network, provides compatibility with existing devices and reduces investment of operators.

### Brief description of the drawings

Figure 1 illustrates a mapping from a multicast IP address to a multicast AS-DMAC address according to the related art.
Figure 2 is a flowchart illustrating a method for supporting the SSM forwarding in Ethernet according to an embodiment of the present invention.
Figure 3 is a flowchart illustrating a mapping from an (S, G) to an SS-DMAC address in an Ethernet switch according to an embodiment of the present invention.
Figure 4 is a flowchart illustrating a mapping from an (S, G) to an SS-DMAC address in a router according to an embodiment of the present invention.
Figure 5 illustrates a network structure according to an embodiment of the present invention.
Figure 6 illustrates a system structure according to an embodiment of the present invention.

### Detailed description of the Invention

In embodiments of the present invention, a Source-Specific DMAC (SS-DMAC) is derived from mapping a Multicast Source-Group address pair (S, G) to a DMAC. The Ethernet switch configures a forwarding port list based on the SS-DMAC address. A router takes the SS-DMAC address as a DMAC address and encapsulates the SS-DMAC address into a multicast Ethernet packet during Ethernet encapsulation. Thus, the SS-DMAC includes information of a Source IP (SIP), and the Ethernet switch may support the SSM during multicast forwarding based on VLAN+DMAC.

The method provided by embodiments of the present invention is applicable for a multicast network including a router and an Ethernet switch. The method includes: the router takes an SS-DMAC address containing information of an (S, G) as a DMAC address when encapsulating an SSM multicast IP packet into an multicast Ethernet packet; and encapsulates the SS-DMAC address into the multicast Ethernet packet. The Ethernet switch forwards the encapsulated multicast Ethernet packet according to the SS-DMAC address.

Preferably, the method in an embodiment of the present invention may also include: configure a consistent corresponding relationship between the (S, G) and the SS-DMAC address respectively in the Ethernet switch and the router; after intercepting an IGMP uplink packet through IGMP Snooping/Proxy, the Ethernet switch determines the SS-DMAC address corresponding to the (S, G) contained in the IGMP uplink packet based on the corresponding relationship configured in the Ethernet switch; configures a forwarding port list based on a VLAN identifier and the SS-DMAC address, and forwards the IGMP uplink packet to the router.

Specifically, the encapsulation of the SSM multicast IP packet into the multicast Ethernet packet by the router and the forwarding of the encapsulated multicast Ethernet packet by the Ethernet switch include the following.

(1) The router determines an SS-DMAC address corresponding to the (S, G) of the SSM multicast IP packet according to the corresponding relationship between the (S, G) and the SS-DMAC address, and takes the SS-DMAC address containing information of an (S, G) as a DMAC address when encapsulating the SSM multicast IP packet into the multicast Ethernet packet; encapsulates the SS-DMAC address into the multicast Ethernet packet; and forwards the encapsulated multicast Ethernet packet to the Ethernet switch.

Specifically, when encapsulating the SSM multicast IP packet, the router determines whether to adopt the SS-DMAC address to encapsulate the SSM multicast IP packet based on a configuration of a routing interface of the router; and encapsulates the SSM multicast IP packet based on the determined result.

(1.1) If determining to adopt the SS-DMAC address to encapsulate the SSM multicast IP packet, the router further determines whether there is an SS-DMAC corresponding to the (S, G) of the SSM multicast IP packet.

If there is an SS-DMAC address corresponding to the (S, G) of the SSM multicast IP packet, the SS-DMAC address is adopted to encapsulate the SSM multicast IP packet.

If there is no SS-DMAC address corresponding to the (S, G) of the SSM multicast IP packet, the router further determines whether it is allowed to adopt the AS-DMAC address to encapsulate the SSM multicast IP packet based on the configuration of the routing interface.

(1.2) If determining not to adopt the SS-DMAC address to encapsulate the SSM multicast IP packet, the router encapsulates the AS-DMAC address into the SSM multicast IP packet, and forwards the encapsulated multicast Ethernet packet to the Ethernet switch.

Specifically, if it is allowed to adopt the AS-DMAC to encapsulate the SSM multicast IP packet, the router encapsulates the AS-DMAC address into the SSM multicast IP packet, and forwards the encapsulated multicast Ethernet packet to the Ethernet switch; otherwise, discards the SSM multicast IP packet.

Step (1) may further include: the router changes or forbids a check of the corresponding relationship between the DMAC and a multicast GIP address at a routing interface receiving the multicast Ethernet packet carrying information of SS-DMAC address Thus, the router may receive the multicast Ethernet packet containing the DMAC address which is not the AS-DMAC address corresponding to the GIP.

(2) The Ethernet switch forwards the encapsulated multicast Ethernet packet to a corresponding port according to the forwarding port list configured based on the VLAN identifier and the SS-DMAC address.

When configuring the forwarding port list, the Ethernet switch determines whether to adopt the SS-DMAC address to configure the forwarding port list based on the VLAN configuration of the Ethernet switch.

(1) If determining to adopt the SS-DMAC address to configure the forwarding port list, the Ethernet switch further determines whether there is an SS-DMAC address corresponding to the (S, G) contained in the IGMP uplink packet, and configures the forwarding port list based on a determination result.

Specifically, if there is an SS-DMAC address corresponding to the (S, G) contained in the IGMP uplink packet, configure the forwarding port list based on the VLAN identifier and the SS-DMAC address.

If there is no SS-DMAC address corresponding to the (S, G) contained in the IGMP uplink packet, the Ethernet switch further determines whether it is allowed to adopt the AS-DMAC address to configure the forwarding port list according to the VLAN configuration of the Ethernet switch, and configures the forwarding port list based on a determination result.

(2) If determining not to adopt the SS-DMAC address to configure the forwarding port list, the Ethernet switch configures the forwarding port list based on the VLAN identifier and an AS-DMAC address.

Specifically, if it is allowed to adopt the AS-DMAC address to configure the forwarding port list, configure the forwarding port list based on the VLAN identifier and the AS-DMAC address; otherwise, discard the IGMP uplink packet.

The method in an embodiment of the present invention may include:
configure a corresponding relationship between the (S, G) of the SSM multicast IP packet and the SS-DMAC address in the router. When the router encapsulates the SSM multicast IP packet, instead of adopting the AS-DMAC address only based on the Group IP address, the router obtains the SS-DMAC address according to the corresponding relationship between the (S, G) and the SS-DMAC address, and takes the SS-DMAC address as the DMAC address for encapsulating the SSM multicast IP packet.

Thus, for the same multicast Group, a plurality of SS-DMAC addresses may be obtained for encapsulation based on different SIPs, wherein the SS-DMAC address includes information of the SIP and the destination multicast IP address.

Meanwhile, a corresponding relationship between the (S, G) and the SS-DMAC address consistent with that in the router is configured in the Ethernet switch.

During IGMP Snooping/Proxy, the Ethernet switch may obtain the SS-DMAC according to the (S, G) contained in the IGMP uplink packet. And during subsequently IGMP Snooping/Proxy, when it is needed to configure the forwarding port list based on the VLAN+DMAC, the Ethernet switch adopts the SS-DMAC to replace the AS-DMAC to configure the forwarding port list.

If the IGMP uplink packet includes a plurality of (S, G), respectively configure an item for each (S, G) according to the corresponding SS-DMAC address.

The corresponding relationship between the (S, G) and the SS-DMAC address may be configured by a mapping table between the (S, G) and the SS-DMAC address or by a HASH function between the (S, G) and the SS-DMAC address, or else.

The router may enable or disable the SS-DMAC function according to configuration of the routing interface. If a routing interface desires to receive multicast Ethernet packet containing the SS-DMAC address, a check of the corresponding relationship between the DMAC and the destination multicast Group IP address needs to be changed or forbidden. Thus, the router may receive the multicast Ethernet packet containing the DMAC address which is not the AS-DMAC address corresponding to the GIP.

When mapping the (S, G) to the SS-DMAC address, the packet without a corresponding SS-DMAC address may be discarded or be configured to adopt the AS-DMAC address. For the router, this option may be configured based on the routing interface. For the Ethernet switch, this option may be configured based on the VLAN of the Ethernet switch.

To make the technical solution of the present invention clearer, the embodiments are further described hereinafter with reference to accompanying drawings.

According to an embodiment of the present invention, the method for supporting SSM forwarding in Ethernet is shown as Figure 2, includes the following blocks:
Block **21:** After intercepting an IGMP uplink packet, the Ethernet switch configures a forwarding port list based on the VLAN+SS-DMAC, and sends the IGMP uplink packet to the router.
   Specifically, when intercepting the IGMP uplink packet during IGMP Snooping/Proxy, the Ethernet switch obtains an SS-DMAC address corresponding to the (S, G) contained in the IGMP uplink packet based on a corresponding relationship between the (S, G) and the SS-DMAC address pre-configured in the Ethernet switch, e.g., through searching a mapping table between the (S, G) and the SS-DMAC address.
   Then the Ethernet switch configures the forwarding port list based on the SS-DMAC address and the VLAN identifier, and forwards the IGMP uplink packet to the router.
   In this way, the Ethernet switch may configure different forwarding port lists based on different SS-DMAC addresses.
Block **22:** The router forwards an SSM multicast IP packet based on the IGMP uplink packet received from the Ethernet switch.
Block **23:** When encapsulating the SSM multicast IP packet, the router obtains the SS-DMAC address corresponding to the (S, G) of the SSM multicast IP packet based on a corresponding relationship between the (S, G) and the SS-DMAC address pre-configured in the router, e.g., through searching a mapping table between the (S, G) and SS-DMAC address.
   Then the router takes the SS-DMAC address as the DMAC address for an Ethernet multicast packet, encapsulates the SS-DMAC address into the Ethernet multicast packet, and forwards the encapsulated Ethernet multicast packet to the Ethernet switch.
   The corresponding relationship between the (S, G) and the SS-DMAC address pre-configured in the router is consistent with that pre-configured in the Ethernet switch in block **21.**
Block **24:** After receiving the Ethernet multicast packet containing the SS-DMAC address, the Ethernet switch searches the forwarding port list according to a VLAN identifier and the SS-DMAC address in the Ethernet multicast packet, sends the Ethernet multicast packet to a corresponding port based on port information in the forwarding port list, and then forwards the Ethernet multicast packet to a corresponding user.

Thus, the host (user) connecting to this port may receive the multicast of a corresponding SIP, thereby the SSM forwarding may be implemented by the Ethernet switch.

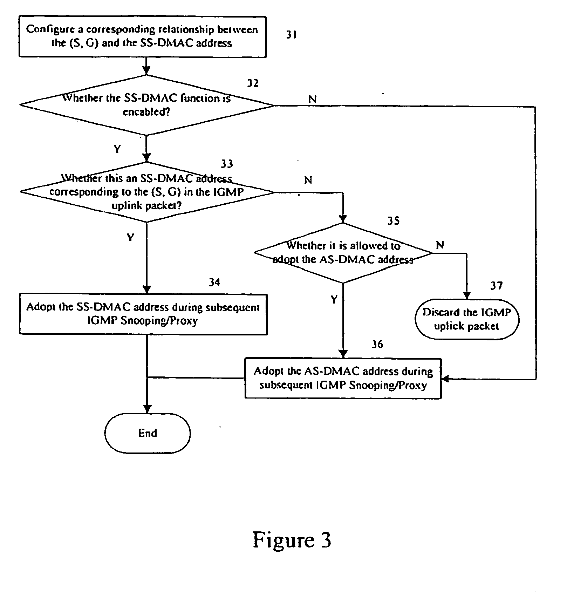

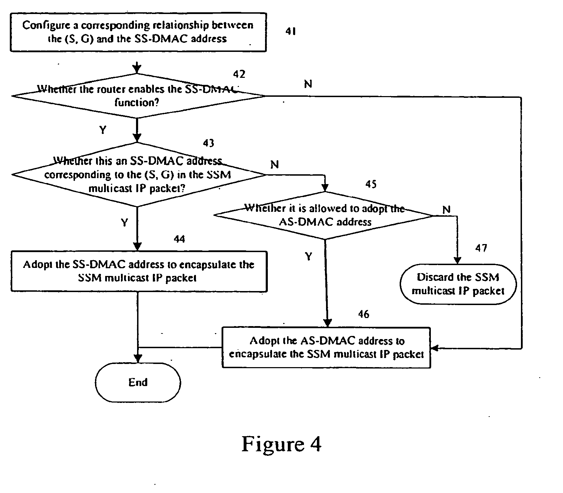

Based on the above method, another embodiment of the present invention provides an additional process for determining whether to activate the SS-DMAC function and for dealing with an unknown (S, G), as shown in Figure 3. The process includes:
Block **31:** Configure a corresponding relationship between the (S, G) and the SS-DMAC address in the Ethernet switch.
   A mapping table between the (S, G) and the SS-DMAC address may be employed to configure the corresponding relationship between the (S, G) and the SS-DMAC in the Ethernet switch.
Block **32:** After intercepting an IGMP uplink packet, the Ethernet switch determines whether to activate the SS-DMAC function according to a VLAN configuration of the Ethernet switch.
   If the SS-DMAC function is activated, proceed to block **33;** otherwise, proceed to block **36.**
Block **33:** Determine whether there is an SS-DMAC address corresponding to the (S, G) contained in the IGMP uplink packet.
   If there is an SS-DMAC corresponding to the (S, G) contained in the IGMP uplink packet in the mapping table between the (S, G) and the SS-DMAC address, proceed to block **34;** otherwise, proceed to block 35.
Block **34:** The Ethernet switch configures the forwarding port list base on the VLAN identifier and the SS-DMAC address.
Block **35:** If there is no SS-DMAC address corresponding to the (S, G) contained in the IGMP uplink packet in the mapping table between the (S, G) and the SS-DMAC address, determine whether it is allowed to adopt the AS-DMAC address to configure the forwarding port list according to the VLAN configuration of the Ethernet switch.
   If it is allowed to adopt the AS-DMAC address to configure the forwarding port list, proceed to block **36;** otherwise, proceed to block **37.**
Block **36:** The Ethernet switch configures the forwarding port list based on the VLAN identifier and the AS-DMAC address.
   In this case, since the forwarding port list is configured based on the VLAN identifier and the AS-DMAC address, the Ethernet switch cannot implement the SSM forwarding.
Block **37:** Discard the IGMP uplink packet.
   If there is no SS-DMAC address corresponding to the (S, G) contained in the IGMP uplink packet in the mapping table between the (S, G) and the SS-DMAC address, and the forwarding port list cannot be configured adopting the AS-DMAC address in the Ethernet switch according to the VLAN configuration of the Ethernet switch, discard the IGMP uplink packet.
   Based on above method, another embodiment of the present invention still provides an additional process for determining whether to activate the SS-DMAC function and for dealing with an unknown (S, G) in the router, as shown in Figure 4. The process includes:
Block **41:** Configure a corresponding relationship between the (S, G) and the SS-DMAC address in the router.
   A mapping table between the (S, G) and the SS-DMAC may be employed to configure the corresponding relationship between the (S, G) and the SS-DMAC address.
   Thus, at the same routing interface of the router, multiple SS-DMAC addresses may be encapsulated for the same destination multicast IP address based on different SIPs besides an AS-DMAC address.
Block **42:** When forwarding an SSM multicast IP packet, the router determines whether to adopt the SS-DMAC address to encapsulate the SSM multicast IP packet into a multicast Ethernet packet based on a configuration of the routing interface.
   If the SS-DMAC address is adopted to encapsulate the SSM multicast IP packet into the multicast Ethernet packet, proceed to block **43;** otherwise, proceed to block **46.**
Block **43:** Determine whether there is an SS-DMAC address corresponding to the (S, G) of the SSM multicast IP packet.
   If there is an SS-DMAC corresponding to the (S, G) of the SSM multicast IP packet in the mapping table between the (S, G) and SS-DMAC address, proceed to block **44;** otherwise, proceed to block **45.**
Block **44:** When encapsulating the SSM multicast IP packet into the multicast Ethernet packet, the router takes the SS-DMAC address corresponding to the (S, G) of the SSM multicast IP packet as the DMAC address, encapsulates the SS-DMAC address into the multicast Ethernet packet, and forwards the encapsulated multicast Ethernet packet to the Ethernet switch.
Block **45:** Determine whether it is allowed to adopt the AS-DMAC address to encapsulate the SSM multicast IP packet containing an unknown (S, G) into a multicast Ethernet packet.
   In embodiments of the present invention, the (S, G) which has no corresponding SS-DMAC address is referred to as an unknown (S, G).
   If there is no SS-DMAC address corresponding to the (S, G) of the SSM multicast IP packet in the mapping table between the (S, G) and the SS-DMAC address, determine whether it is allowed to adopt the AS-DMAC address to encapsulate the SSM multicast IP packet into the multicast Ethernet packet based on the configuration of the routing interface.
   If it is allowed to adopt the AS-DMAC address to encapsulate the SSM multicast IP packet containing the unknown (S, G) into the multicast Ethernet packet, proceed to block **46;** otherwise, proceed to **47.**
Block **46:** When encapsulating the SSM multicast IP packet into the multicast Ethernet packet, the router takes the AS-DMAC address as the DMAC address, encapsulates the AS-DMAC address into the multicast Ethernet packet, and forwards the encapsulated multicast Ethernet packet to the Ethernet switch.
   In this case, since the AS-DMAC address is encapsulated in the multicast Ethernet packet, the SSM forwarding cannot be implemented.
Block **47:** Discard the SSM multicast IP packet.
   If there is no SS-DMAC address corresponding to the (S, G) of the SSM multicast IP packet in the mapping table between the (S, G) and the SS-DMAC address, and the routing interface does not allow to adopt the AS-DMAC address to encapsulate the SSM multicast IP packet into the multicast Ethernet packet, discard the SSM multicast IP packet.

The Ethernet switch in the embodiments of the present invention may be various forwarding devices adopting Ethernet technology, including an Ethernet switch, an IP Digital Subscriber Line Access Multiplexer (IP DSLAM) based on Ethernet forwarding, etc.

Preferably, the method provided by embodiments of the present invention may be implemented at an incoming interface of an edge router. The edge router refers to the router which has a routing interface directly connected with a host or connected with the host through an Ethernet bridge. And the incoming interface of the edge router refers to the interface only connected with the host (directly or via the Ethernet switch) but not connected with another router. The incoming interface of the edge router is usually connected with a relatively large layer 2 network (e.g., in the case of a telecommunication access network). Multicast packets are forwarded in the Ethernet through the layer 2 network, and forwarded to the host by an edge Ethernet switch. Through activating the SS-DMAC function at the incoming interface of the edge router, the layer 2 network may support the SSM. For a non-incoming interface of the edge router, since there is a router at a next hop, the multicast packet is forwarded by the router instead of the Ethernet switch. Therefore, the SS-DMAC function is not required and may be disabled at the non-incoming interface of the edge router.

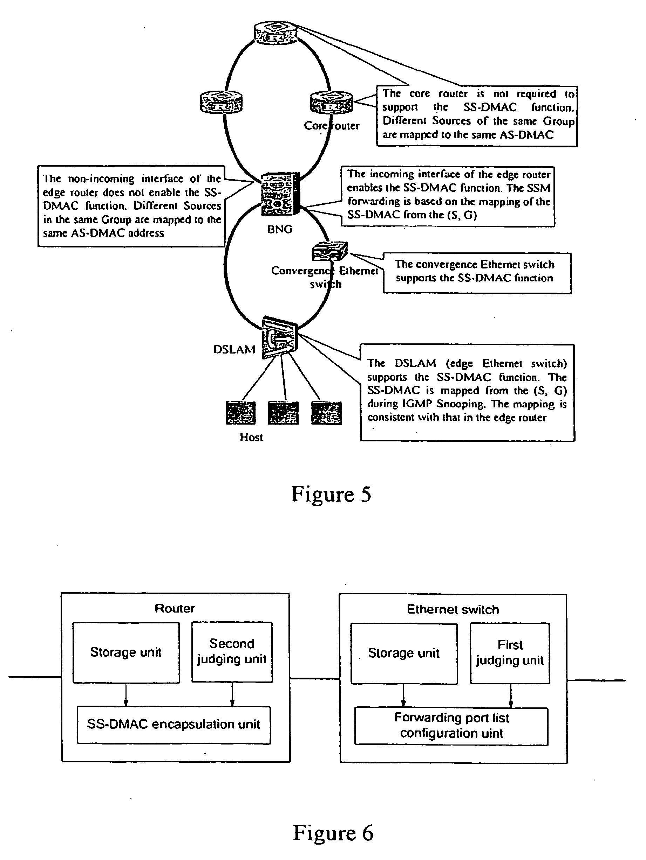

With a Digital Subscriber Line (DSL) access network as example, an IP DSLAM access network usually adopts Ethernet technology to implement multicast forwarding. To implement the SSM multicast forwarding, a Broadband Network Gateway (BNG) and the DSLAM are required to support the SS-DMAC function, as shown in Figure 5. The BNG enables the SS-DMAC function at an incoming interface but disables the SS-DMAC function at a core network interface. The DSLAM and a convergence switch enable the SS-DMAC function. The router in a core network is not required to support the SS-DMAC function. When the SS-DMAC is adopted for the SSM forwarding, the edge router needs to change or forbid a corresponding relationship check between the multicast AS-DMAC address and a destination multicast IP address.

An embodiment of the present invention also provides a system for supporting the SSM forwarding in Ethernet, as shown in Figure 6. The system includes a router, configured to take a Source-Specific Destination Media Access Control, SS-DMAC, address containing information of an (S, G) as a DMAC address when encapsulating an SSM multicast IP packet into a multicast Ethernet packet, and encapsulate the SS-DMAC address into the multicast Ethernet packet; and an Ethernet switch, configured to forward the encapsulated multicast Ethernet packet according to the SS-DMAC address.

The router and the Ethernet switch respectively further include a storage unit, configured to store a consistent corresponding relationship between the (S, G) and the SS-DMAC address.

The router may further include an SS-DMAC encapsulating unit, configured to take the SS-DMAC address containing the information of the (S, G) as the DMAC address when encapsulating the SSM multicast IP packet into the multicast Ethernet packet, and encapsulate the SS-DMAC address into the multicast Ethernet packet.

The Ethernet switch may further include a forwarding port list configuration unit, configured to determine the SS-DMAC address corresponding to the (S, G) contained in an intercepted IGMP uplink packet based on the IGMP uplink packet and the corresponding relationship between the (S, G) and the SS-DMAC address, and configure a forwarding port list based on a Virtual Local Area Network, VLAN, identifier and the SS-DMAC address.

The Ethernet switch may further include a fist judging unit, configured to determine whether to adopt the SS-DMAC address to configure the forwarding port list according to a VLAN configuration of the Ethernet switch, and trigger the forwarding port list configuration unit if determining to adopt the SS-DMAC address to configure the forwarding port list.

The router may further include a second judging unit, configured to determine whether to adopt the SS-DMAC address to encapsulate the SSM multicast IP packet based on a configuration of a routing interface of the router, and trigger the SS-DMAC encapsulation unit if determining to adopt the SS-DMAC address to encapsulate the SSM multicast IP packet.

By applying the solution provided by the embodiments of the present invention, the Ethernet switch may easily support the SSM forwarding.

Specifically, the forwarding mechanism based on VLAN+DMAC and the protocol stack of the Ethernet switch need not be changed. And only the forwarding components of an edge router and the IGMP snooping component of the Ethernet switch need to be modified, i.e., the Ethernet switch may support SSM forwarding without much hardware modification. The Ethernet switch may implement the method of the embodiments of the present invention through software upgrade, i.e., support the SSM forwarding through software upgrade.

Therefore, the solution provided by embodiments of the present invention lowers device cost and upgrade cost of a whole network, provides compatibility with existed devices and reduces investment of operators.

The foregoing is only preferred embodiments of the present invention. The protection scope of the present invention is not limited to the above description. Any alteration or substitution that is within the technical scope disclosed by the present invention and can easily occur to those skilled in the art should be covered in the protection scope of the present invention. Hence the protection scope of the present invention should be determined by the statements in claims.

## Claims

1. A method for supporting Source-Specific Multicast in Ethernet, applicable to a multicast network comprising a router and an Ethernet switch, comprising:
taking, by the router, a Source-Specific Destination Media Access Control address containing a Multicast Source-Group address pair consisting of a Source IP address and a multicast Group IP address as a Destination Media Access Control address when encapsulating a Source-Specific Multicast IP packet into a multicast Ethernet packet; and encapsulating the Source-Specific Destination Media Access Control address into the multicast Ethernet packet;
forwarding, by the Ethernet switch, the encapsulated multicast Ethernet packet according to the Source-Specific Destination Media Access Control address.

2. The method of claim 1, further comprising:
configuring a corresponding relationship between the Source-Specific Destination Media Access Control address and the Multicast Source Group address pair respectively in the Ethernet switch and the router;
after intercepting an Internet Group Management Protocol uplink packet through Internet Group Management Protocol Snooping/Proxy, determining, by the Ethernet switch, the Source-Specific Destination Media Access Control address corresponding to the Multicast Source Group address pair contained in the Internet Group Management Protocol uplink packet based on the corresponding relationship configured in the Ethernet switch; and
configuring a forwarding port list based on a Virtual Local Area Network identifier and the Source-Specific Destination Media Access Control address.

3. The method of claim 2, further comprising:
determining, by the Ethernet switch, whether to adopt the Source-Specific Destination Media Access Control address to configure the forwarding port list according to a Virtual Local Area Network configuration of the Ethernet switch before configuring the forwarding port list;
if determining to adopt the Source-Specific Destination Media Access Control address to configure the forwarding port list, determining, by the Ethernet switch, whether there is a Source-Specific Destination Media Access Control address corresponding to the Multicast Source Group address pair contained in the Internet Group Management Protocol uplink packet, and configuring the forwarding port list based on a determination result;
if determining not to adopt the Source-Specific Destination Media Access Control address to configure the forwarding port list, configuring, by the Ethernet switch, the forwarding port list based on the Virtual Local Area Network identifier and an Any Source Destination Media Access Control address.

4. The method of claim 3, wherein the configuring the forwarding port list based on a determination result comprises:
if there is a Source-Specific Destination Media Access Control address corresponding to the Multicast Source Group address pair contained in the Internet Group Management Protocol uplink packet, configuring, by the Ethernet switch, the forwarding port list based on the Virtual Local Area Network identifier and the Source-Specific Destination Media Access Control address;
if there is no Source-Specific Destination Media Access Control address corresponding to the Multicast Source Group address pair contained in the Internet Group Management Protocol uplink packet, determining, by the Ethernet switch, whether it is allowed to adopt the Any Source Destination Media Access Control address to configure the forwarding port list according to the Virtual Local Area Network configuration of the Ethernet switch;
if it is allowed to adopt the Any Source Destination Media Access Control address to configure the forwarding port list, configuring the forwarding port list based on the Virtual Local Area Network identifier and the Any Source Destination Media Access Control address; otherwise, discarding the Internet Group Management Protocol uplink packet.

5. The method of any one of claims 1 to 4, wherein the encapsulating a Source-Specific Multicast IP packet into a multicast Ethernet packet comprises:
determining, by the router, whether to adopt the Source-Specific Destination Media Access Control address to encapsulate the Source-Specific Multicast IP packet based on a configuration of a routing interface of the router;
if determining to adopt the Source-Specific Destination Media Access Control address to encapsulate the Source-Specific Multicast IP packet, adopting the Source-Specific Destination Media Access Control address to encapsulate the Source-Specific Multicast IP packet; otherwise, adopting an Any Source Destination Media Access Control address as the Destination Media Access Control address to encapsulate the Source-Specific Multicast IP packet.

6. The method of claim 5, wherein the adopting the Source-Specific Destination Media Access Control address to encapsulate the Source-Specific Multicast IP packet comprises:
determining whether there is an Source-Specific Destination Media Access Control address corresponding to the Multicast Source Group address pair of the Source-Specific Multicast IP packet;
if there is a Source-Specific Destination Media Access Control address corresponding to the Multicast Source Group address pair of the Source-Specific Multicast IP packet, adopting the Source-Specific Destination Media Access Control address to encapsulate the Source-Specific Multicast IP packet;
if there is no Source-Specific Destination Media Access Control address corresponding to the Multicast Source Group address pair of the Source-Specific Multicast IP packet, determining wether it is allowed to adopt the Any Source Destination Media Access Control address to encapsulate the Source-Specific Multicast IP packet based on the configuration of the routing interface;
if it is allowed to adopt the Any Source Destination Media Access Control address to encapsulate the Source-Specific Multicast IP packet, taking the Any Source Destination Media Access Control address as the Destination Media Access Control address, encapsulating the Any Source Destination Media Access Control address into the Source-Specific Multicast IP packet; otherwise, discarding the Source-Specific Multicast IP packet.

7. The method of any one of claims 1 to 5, further comprising:
changing or forbidding, by the router, a corresponding relationship check between the Destination Media Access Control address and a multicast Group IP address at a routing interface receiving the multicast Ethernet packet carrying information of Source-Specific Destination Media Access Control address.

8. A system for supporting Source-Specific Multicast forwarding in Ethernet, comprising:
a router, configured to take a Source-Specific Destination Media Access Control address containing a Multicast Source-Group address pair consisting of a Source IP address and a multicast Group IP address as a Destination Media Access Control address when encapsulating an Source-Specific Multicast IP packet into a multicast Ethernet packet, and encapsulate the Source-Specific Destination Media Access Control address into the multicast Ethernet packet; and
an Ethernet switch, configured to forward the encapsulated multicast Ethernet packet according to the Source-Specific Destination Media Access Control address.

9. The system of claim 8, wherein the router and the Ethernet switch respectively further comprises a storage unit, configured to store a consistent corresponding relationship between the Multicast Source-Group address pair and the Source-Specific Destination Media Access Control address; and
the router further comprises an Source-Specific Destination Media Access Control address encapsulating unit, configured to take the Source-Specific Destination Media Access Control address containing the information of the Multicast Source-Group address pair as the Destination Media Access Control address when encapsulating the Source-Specific Multicast IP packet into the multicast Ethernet packet, and encapsulate the Source-Specific Destination Media Access Control address into the multicast Ethernet packet;
the Ethernet switch further comprises a forwarding port list configuration unit, configured to determine the Source-Specific Destination Media Access Control address corresponding to the Multicast Source-Group address pair contained in an intercepted Internet Group Management Protocol uplink packet based on the Internet Group Management Protocol uplink packet and the corresponding relationship between the Multicast Source-Group address pair and the Source-Specific Destination Media Access Control address, and configure a forwarding port list based on a Virtual Local Area Network identifier and the Source-Specific Destination Media Access Control address.

10. The system of claim 9, wherein the Ethernet switch further comprises a first judging unit, configured to determine whether to adopt the Source-Specific Destination Media Access Control address to configure the forwarding port list according to a Virtual Local Area Network configuration of the Ethernet switch, and trigger the forwarding port list configuration unit if determining to adopt the Source-Specific Destination Media Access Control address to configure the forwarding port list.

11. The system of any one of claims 8 to 10, wherein the router further comprises a second judging unit, configured to determine whether to adopt the Source-Specific Destination Media Access Control address to encapsulate the Source-Specific Multicast IP packet based on a configuration of a routing interface of the router, and trigger the Source-Specific Destination Media Access Control address encapsulation unit if determining to adopt the Source-Specific Destination Media Access Control address to encapsulate the Source-Specific Multicast IP packet.

12. A router for supporting Source-Specific Multicast forwarding, comprising:
a Source-Specific Destination Media Access Control address encapsulation unit, configured to take a Source-Specific Destination Media Access Control address containing a Multicast Source-Group address pair consisting of a Source IP address and the multicast Group IP address as a Destination Media Access Control address when encapsulating an Source-Specific Multicast IP packet into a multicast Ethernet packet, and encapsulate the Source-Specific Destination Media Access Control address into the multicast Ethernet packet.

13. The router of claim 12, further comprising:
a storage unit, configured to store a corresponding relationship between the Multicast Source-Group address pair and the Source-Specific Destination Media Access Control address.

14. The router of any one of claims 12 to 13, further comprising:
a judging unit, configured to determine whether to adopt the Source-Specific Destination Media Access Control address to encapsulate the Source-Specific Multicast IP packet based on a configuration of a routing interface of the router, and trigger the Source-Specific Destination Media Access Control address encapsulation unit if determining to adopt the Source-Specific Destination Media Access Control address to encapsulate the Source-Specific Multicast IP packet.

15. An Ethernet switch for supporting Source-Specific Multicast forwarding, comprising:
a storage unit, configured to store a corresponding relationship between a Multicast Source-Group address pair consisting of a Source IP address and a multicast Group IP address, and a Source-Specific Destination Media Access Control address;
a forwarding port list configuration unit, configured to determine a Source-Specific Destination Media Access Control address corresponding to a Source IP address and a multicast Group IP address contained in an intercepted Internet Group Management Protocol uplink packet based on an Internet Group Management Protocol uplink packet and the corresponding relationship between the Multicast Source-Group address pair and the Source-Specific Destination Media Access Control address, and configure a forwarding port list based on a Virtual Local Area Network identifier and the Source-Specific Destination Media Access Control address.

16. The Ethernet switch of claim 15, further comprising:
a judging unit, configured to determine whether to adopt the Source-Specific Destination Media Access Control address to configure the forwarding port list according to a Virtual Local Area Network configuration of the Ethernet switch, and trigger the forwarding port list configuration unit if determining to adopt the Source-Specific Destination Media Access Control address to configure the forwarding port list.

## Patentansprüche

1. Verfahren zur Unterstützung von quellenspezifischem Multicast bei Ethernet, das auf ein Multicast-Netzwerk anwendbar ist, das einen Router und einen Ethernet-Switch umfasst, mit den folgenden Schritten:
der Router nimmt eine quellenspezifische Zieladresse der Media Access Control, die ein Multicast-Quellengruppen-Adressenpaar enthält, das aus einer Quellen-IP-Adresse und einer Multicast-Gruppen-IP-Adresse besteht, als eine Zieladresse der Media Access Control beim Einkapseln eines quellenspezifischen Multicast-IP-Pakets in ein Multicast-Ethernet-Paket; und die quellenspezifische Zieladresse der Media Access Control wird in das Multicast-Ethernet-Paket eingekapselt;
der Ethernet-Switch leitet das eingekapselte Multicast-Ethernet-Paket gemäß der quellenspezifischen Zieladresse der Media Access Control weiter.

2. Verfahren nach Anspruch 1, ferner mit den folgenden Schritten:
in dem Ethernet-Switch und in dem Router wird jeweils eine entsprechende Beziehung zwischen der quellenspezifischen Zieladresse der Media Access Control und dem Multicast-Quellengruppen-Adressenpaar konfiguriert;
nach dem Abfangen eines Aufwärtsstreckenpakets des Internet Group Management Protocol durch Snooping/Proxy des Internet Group Management Protocol bestimmt der Ethernet-Switch die quellenspezifische Zieladresse der Media Access Control, die dem Multicast-Quellengruppen-Adressenpaar entspricht, das in dem Aufwärtsstreckenpaket des Internet Group Management Protocol enthalten ist, auf der Basis der in dem Ethernet-Switch konfigurierten entsprechenden Beziehung; und
eine Weiterleitungs-Portliste wird auf der Basis einer Kennung des virtuellen lokalen Netzwerks und der quellenspezifischen Zieladresse der Media Access Control konfiguriert.

3. Verfahren nach Anspruch 2, ferner mit den folgenden Schritten:
der Ethernet-Switch bestimmt, ob die quellenspezifische Zieladresse der Media Access Control zum Konfigurieren der Weiterleitungs-Portliste zu verwenden ist, gemäß einer Konfiguration des virtuellen lokalen Netzwerks des Ethernet-Switch vor dem Konfigurieren der Weiterleitungs-Portliste;
wenn bestimmt wird, die quellenspezifische Zieladresse der Media Access Control zum Konfigurieren der Weiterleitungs-Portliste zu verwenden, bestimmt der Ethernet-Switch, ob eine quellenspezifische Zieladresse der Media Access Control vorliegt, die dem Multicast-Quellengruppen-Adressenpaar entspricht, das in dem Aufwärtsstreckenpaket des Internet Group Management Protocol enthalten ist, und die Weiterleitungs-Portliste wird auf der Basis eines Bestimmungsergebnisses konfiguriert;
wenn bestimmt wird, die quellenspezifische Zieladresse der Media Access Control nicht zum Konfigurieren der Weiterleitungs-Portliste zu verwenden, konfiguriert der Ethernet-Switch die Weiterleitungs-Portliste auf der Basis der Kennung des virtuellen lokalen Netzwerks und einer Quelle-Ziel-Beliebig-Adresse der Media Access Control.

4. Verfahren nach Anspruch 3, wobei das Konfigurieren der Weiterleitungs-Portliste auf der Basis eines Bestimmungsergebnisses Folgendes umfasst:
wenn eine quellenspezifische Zieladresse der Media Access Control vorliegt, die dem Multicast-Quellengruppen-Adressenpaar entspricht, das in dem Aufwärtsstreckenpaket des Internet Group Management Protocol enthalten ist, konfiguriert der Ethernet-Switch die Weiterleitungs-Portliste auf der Basis der Kennung des virtuellen lokalen Netzwerks und der quellenspezifischen Zieladresse der Media Access Control;
wenn keine quellenspezifische Zieladresse der Media Access Control vorliegt, die dem Multicast-Quellengruppen-Adressenpaar entspricht, das in dem Aufwärtsstreckenpaket des Internet Group Management Protocol enthalten ist, bestimmt der Ethernet-Switch, ob es erlaubt ist, die Quelle-Ziel-Beliebig-Adresse der Media Access Control zu verwenden, um die Weiterleitungs-Portliste zu konfigurieren, gemäß der Konfiguration des virtuellen lokalen Netzwerks des Ethernet-Switch;
wenn es erlaubt ist, die Quelle-Ziel-Beliebig-Adresse der Media Access Control zum Konfigurieren der Weiterleitungs-Portliste zu verwenden, wird die Weiterleitungs-Portliste auf der Basis der Kennung des virtuellen lokalen Netzwerks und der Quelle-Ziel-Beliebig-Adresse der Media Access Control konfiguriert; andernfalls wird das Aufwärtsstreckenpaket des Internet Group Management Protocol verworfen.

5. Verfahren nach einem der Ansprüche 1 bis 4, wobei das Einkapseln eines quellenspezifischen Multicast-IP-Pakets in ein Multicast-Ethernet-Paket Folgendes umfasst:
der Router bestimmt, ob die quellenspezifische Zieladresse der Media Access Control zum Einkapseln des quellenspezifischen Multicast-IP-Pakets zu verwenden ist, auf der Basis einer Konfiguration einer Routing-Schnittstelle des Routers;
wenn bestimmt wird, die quellenspezifische Zieladresse der Media Access Control zum Einkapseln des quellenspezifischen Multicast-IP-Pakets zu verwenden, wird die quellenspezifische Zieladresse der Media Access Control zum Einkapseln des quellenspezifischen Multicast-IP-Pakets verwendet; andernfalls wird eine Quelle-Ziel-Beliebig-Adresse der Media Access Control als die Zieladresse der Media Access Control zum Einkapseln des quellenspezifischen Multicast-IP-Pakets verwendet.

6. Verfahren nach Anspruch 5, wobei das Verwenden der quellenspezifischen Zieladresse der Media Access Control zum Einkapseln des quellenspezifischen Multicast-IP-Pakets Folgendes umfasst:
Bestimmen, ob eine quellenspezifische Zieladresse der Media Access Control vorliegt, die dem Multicast-Quellengruppen-Adressenpaar des quellenspezifischen Multicast-IP-Pakets entspricht;
wenn eine quellenspezifische Zieladresse der Media Access Control vorliegt, die dem Multicast-Quellengruppen-Adressenpaar des quellenspezifischen Multicast-IP-Pakets entspricht, Verwenden der quellenspezifischen Zieladresse der Media Access Control zum Einkapseln des quellenspezifischen Multicast-IP-Pakets;
wenn keine quellenspezifische Zieladresse der Media Access Control vorliegt, die dem Multicast-Quellengruppen-Adressenpaar des quellenspezifischen Multicast-IP-Pakets entspricht, Bestimmen, ob es erlaubt ist, die Quelle-Ziel-Beliebig-Adresse der Media Access Control zum Einkapseln des quellenspezifischen Multicast-IP-Pakets zu verwenden, auf der Basis der Konfiguration der Routing-Schnittstelle;
wenn es erlaubt ist, die Quelle-Ziel-Beliebig-Adresse der Media Access Control zum Einkapseln des quellenspezifischen Multicast-IP-Pakets zu verwenden, Nehmen der Quelle-Ziel-Beliebig-Adresse der Media Access Control als die Zieladresse der Media Access Control, Einkapseln der Quelle-Ziel-Beliebig-Adresse der Media Access Control in das quellenspezifische Multicast-IP-Paket; andernfalls Verwerfen des quellenspezifischen Multicast-IP-Pakets.

7. Verfahren nach einem der Ansprüche 1 bis 5, ferner mit dem folgenden Schritt:
der Router ändert oder verbietet eine Prüfung der entsprechenden Beziehung zwischen der Zieladresse der Media Access Control und einer Multicast-Gruppen-IP-Adresse in einer Routing-Schnittstelle, die das Multicast-Ethernet-Paket empfängt, das Informationen der quellenspezifischen Zieladresse der Media Access Control führt.

8. System zur Unterstützung von quellenspezifischer Multicast-Weiterleitung bei Ethernet, umfassend:
einen Router, der dafür ausgelegt ist, eine quellenspezifische Zieladresse der Media Access Control, die ein Multicast-Quellengruppen-Adressenpaar enthält, das aus einer Quellen-IP-Adresse und einer Multicast-Gruppen-IP-Adresse besteht, als eine Zieladresse der Media Access Control beim Einkapseln eines quellenspezifischen Multicast-IP-Pakets in ein Multicast-Ethernet-Paket zu nehmen und die quellenspezifische Zieladresse der Media Access Control in das Multicast-Ethernet-Paket einzukapseln; und
einen Ethernet-Switch, der dafür ausgelegt ist, das eingekapselte Multicast-Ethernet-Paket gemäß der quellenspezifischen Zieladresse der Media Access Control weiterzuleiten.

9. System nach Anspruch 8, wobei der Router und der Ethernet-Switch jeweils ferner eine Speichereinheit umfassen, die dafür ausgelegt ist, eine stimmige entsprechende Beziehung zwischen dem Multicast-Quellengruppen-Adressenpaar und der quellenspezifischen Zieladresse der Media Access Control zu speichern; und
der Router ferner eine Einkapselungseinheit der quellenspezifischen Zieladresse der Media Access Control umfasst, die dafür ausgelegt ist, die quellenspezifische Zieladresse der Media Access Control, die die Informationen des Multicast-Quellengruppen-Adressenpaars enthält, beim Einkapseln des quellenspezifischen Multicast-IP-Pakets in das Multicast-Ethernet-Paket als die Zieladresse der Media Access Control zu nehmen und die quellenspezifische Zieladresse der Media Access Control in das Multicast-Ethernet-Paket einzukapseln;
wobei der Ethernet-Switch ferner eine Weiterleitungs-Portlisten-Konfigurationseinheit umfasst, die dafür ausgelegt ist, die quellenspezifische Zieladresse der Media Access Control, die dem Multicast-Quellengruppen-Adressenpaar entspricht, das in einem abgefangenen Aufwärtsstreckenpaket des Internet Group Management Protocol enthalten ist, auf der Basis des Aufwärtsstreckenpakets des Internet Group Management Protocol und der entsprechenden Beziehung zwischen dem Multicast-Quellengruppen-Adressenpaar und der quellenspezifischen Zieladresse der Media Access Control zu bestimmen und eine Weiterleitungs-Portliste auf der Basis einer Kennung des virtuellen lokalen Netzwerks und der quellenspezifischen Zieladresse der Media Access Control zu konfigurieren.

10. System nach Anspruch 9, wobei der Ethernet-Switch ferner eine erste Beurteilungseinheit umfasst, die dafür ausgelegt ist, gemäß einer Konfiguration des virtuellen lokalen Netzwerks des Ethernet-Switch zu bestimmen, ob die quellenspezifische Zieladresse der Media Access Control zum Konfigurieren der Weiterleitungs-Portliste zu verwenden ist, und die Weiterleitungs-Portlisten-Konfigurationseinheit zu triggern, wenn bestimmt wird, die quellenspezifische Zieladresse der Media Access Control zum Konfigurieren der Weiterleitungs-Portliste zu verwenden.

11. System nach einem der Ansprüche 8 bis 10, wobei der Router ferner eine zweite Beurteilungseinheit umfasst, die dafür ausgelegt ist, auf der Basis einer Konfiguration einer Routing-Schnittstelle des Routers zu bestimmen, ob die quellenspezifische Zieladresse der Media Access Control zum Einkapseln des quellenspezifischen Multicast-IP-Pakets zu verwenden ist, und die Einkapselungseinheit der quellenspezifischen Zieladresse der Media Access Control zu triggern, wenn bestimmt wird, die quellenspezifische Zieladresse der Media Access Control zum Einkapseln des quellenspezifischen Multicast-IP-Pakets zu verwenden.

12. Router zur Unterstützung von quellenspezifischer Multicast-Weiterleitung, umfassend:
eine Einkapselungseinheit der quellenspezifischen Zieladresse der Media Access Control, die dafür ausgelegt ist, eine quellenspezifische Zieladresse der Media Access Control, die ein Multicast-Quellengruppen-Adressenpaar enthält, das aus einer Quellen-IP-Adresse und der Multicast-Gruppen-IP-Adresse besteht, beim Einkapseln eines quellenspezifischen Multicast-IP-Pakets in ein Multicast-Ethernet-Paket als eine Zieladresse der Media Access Control zu nehmen und die quellenspezifische Zieladresse der Media Access Control in das Multicast-Ethernet-Paket einzukapseln.

13. Router nach Anspruch 12, ferner umfassend:
eine Speichereinheit, die dafür ausgelegt ist, eine entsprechende Beziehung zwischen dem Multicast-Quellengruppen-Adressenpaar und der quellenspezifischen Zieladresse der Media Access Control zu speichern.

14. Router nach einem der Ansprüche 12 bis 13, ferner umfassend:
eine Beurteilungseinheit, die dafür ausgelegt ist, auf der Basis einer Konfiguration einer Routing-Schnittstelle des Routers zu bestimmen, ob die quellenspezifische Zieladresse der Media Access Control zum Einkapseln des quellenspezifischen Multicast-IP-Pakets zu verwenden ist, und die Einkapselungseinheit der quellenspezifischen Zieladresse der Media Access Control zu triggern, wenn bestimmt wird, die quellenspezifische Zieladresse der Media Access Control zum Einkapseln des quellenspezifischen Multicast-IP-Pakets zu verwenden.

15. Ethernet-Switch zur Unterstützung von quellenspezifischer Multicast-Weiterleitung, umfassend:
eine Speichereinheit, die dafür ausgelegt ist, eine entsprechende Beziehung zwischen einem Multicast-Quellengruppen-Adressenpaar, das aus einer Quellen-IP-Adresse und einer Multicast-Gruppen-IP-Adresse besteht, und einer quellenspezifischen Zieladresse der Media Access Control zu speichern;
eine Weiterleitungs-Portlisten-Konfigurationseinheit, die dafür ausgelegt ist, eine quellenspezifische Zieladresse der Media Access Control, die einer Quellen-IP-Adresse und einer Multicast-Gruppen-IP-Adresse entspricht, die in einem abgefangenen Aufwärtsstreckenpaket des Internet Group Management Protocol enthalten ist, auf der Basis eines Aufwärtsstreckenpakets des Internet Group Management Protocol und der entsprechenden Beziehung zwischen dem Multicast-Quellengruppen-Adressenpaar und der quellenspezifischen Zieladresse der Media Access Control zu bestimmen und eine Weiterleitungs-Portliste auf der Basis einer Kennung des virtuellen lokalen Netzwerks und der quellenspezifischen Zieladresse der Media Access Control zu konfigurieren.

16. Ethernet-Switch nach Anspruch 15, ferner umfassend:
eine Beurteilungseinheit, die dafür ausgelegt ist, gemäß einer Konfiguration des virtuellen lokalen Netzwerks des Ethernet-Switch zu bestimmen, ob die quellenspezifische Zieladresse der Media Access Control zum Konfigurieren der Weiterleitungs-Portliste zu verwenden ist, und die Weiterleitungs-Portlisten-Konfigurationseinheit zu triggern, wenn bestimmt wird, die quellenspezifische Zieladresse der Media Access Control zum Konfigurieren der Weiterleitungs-Portliste zu verwenden.

## Revendications

1. Procédé de prise en charge de la multidiffusion spécifique de la source sur Ethernet, pouvant s'appliquer à un réseau de type multidiffusion comprenant un routeur et un commutateur Ethernet, consistant à :
utiliser, sur le routeur, une adresse de contrôle d'accès au support de destination spécifique de la source contenant une paire d'adresses source-groupe de multidiffusion constituée d'une adresse IP de source et d'une adresse IP de groupe de multidiffusion en tant qu'adresse de contrôle d'accès au support de destination lors de l'encapsulation d'un paquet IP de multidiffusion spécifique de la source dans un paquet Ethernet de multidiffusion ; et encapsuler l'adresse de contrôle d'accès au support de destination spécifique de la source dans le paquet Ethernet de multidiffusion ;
réexpédier, sur le commutateur Ethernet, le paquet Ethernet de multidiffusion encapsulé en fonction de l'adresse de contrôle d'accès au support de destination spécifique de la source.

2. Procédé selon la revendication 1, consistant en outre à :
configurer une relation correspondante entre respectivement l'adresse de contrôle d'accès au support de destination spécifique de la source et la paire d'adresses de source-groupe de multidiffusion dans le commutateur Ethernet et le routeur ;
après avoir intercepté le paquet de liaison montante du protocole de gestion de groupe Internet par l'intermédiaire d'un dispositif de surveillance/mandataire de protocole de gestion de groupe Internet, déterminer, sur le commutateur Ethernet, l'adresse de contrôle d'accès au support de destination spécifique de la source correspondant à la paire d'adresses de source-groupe de multidiffusion contenue dans le paquet de liaison montante du protocole de gestion de groupe Internet sur la base de la relation configurée dans le commutateur Ethernet ; et
configurer une liste de ports de réexpédition sur la base d'un identifiant de réseau local virtuel et de l'adresse de contrôle d'accès au support de destination spécifique de la source.

3. Procédé selon la revendication 2, consistant en outre à :
déterminer, sur le commutateur Ethernet, s'il est nécessaire d'adopter l'adresse de contrôle d'accès au support de destination spécifique de la source pour configurer la liste de ports de réexpédition en conformité avec une configuration de réseau local virtuel du commutateur Ethernet avant de configurer la liste de ports de réexpédition ;
s'il est déterminé qu'il est nécessaire d'adopter l'adresse de contrôle d'accès au support de destination spécifique de la source pour configurer la liste de ports de réexpédition, déterminer, sur le commutateur Ethernet, s'il y a une adresse de contrôle d'accès au support de destination spécifique de la source correspondant à la paire d'adresses de source-groupe de multidiffusion contenue dans le paquet de liaison montante du protocole de gestion de groupe Internet et configurer la liste de ports de réexpédition sur la base d'un résultat de détermination ;
s'il est déterminé de ne pas adopter l'adresse de contrôle d'accès au support de destination spécifique de la source pour configurer la liste de ports de réexpédition, configurer, sur le commutateur Ethernet, la liste de ports de réexpédition sur la base de l'identifiant de réseau local virtuel et d'une adresse de contrôle d'accès au support de destination pour une source quelconque.

4. Procédé selon la revendication 3, dans lequel la configuration de la liste de ports de réexpédition sur la base d'un résultat de détermination consiste à :
s'il y a une adresse de contrôle d'accès au support de destination spécifique de la source correspondant à la paire d'adresses de source-groupe de multidiffusion contenue dans le paquet de liaison montante du protocole de gestion de groupe Internet, configurer, sur le commutateur Ethernet, la liste de ports de réexpédition sur la base de l'identifiant de réseau local virtuel et de l'adresse de contrôle d'accès au support de destination spécifique de la source ;
s'il n'y a pas d'adresse de contrôle d'accès au support de destination spécifique de la source correspondant à la paire d'adresses de source-groupe de multidiffusion contenue dans le paquet de liaison montante du protocole de gestion de groupe Internet, déterminer, sur le commutateur Ethernet, s'il est permis d'adopter l'adresse de contrôle d'accès au support de destination pour une source quelconque pour configurer la liste de ports de réexpédition conformément à la configuration de réseau local virtuel du commutateur Ethernet ;
s'il est permis d'adopter l'adresse de contrôle d'accès au support de destination pour une source quelconque pour configurer la liste de ports de réexpédition, configurer la liste de ports de réexpédition sur la base de l'identifiant de réseau local virtuel et de l'adresse de contrôle d'accès au support de destination pour une source quelconque et, dans le cas contraire, rejeter le paquet de liaison montante du protocole de gestion de groupe Internet.

5. Procédé selon l'une quelconque des revendications 1 à 4, dans lequel l'encapsulation d'un paquet IP de multidiffusion spécifique de la source dans un paquet Ethernet de multidiffusion consiste à :
déterminer, sur le routeur, s'il est nécessaire d'adopter l'adresse de contrôle d'accès au support de destination spécifique de la source pour encapsuler le paquet IP de multidiffusion spécifique de la source sur la base d'une configuration d'une interface de routage du routeur ;
s'il est déterminé qu'il est nécessaire d'adopter l'adresse de contrôle d'accès au support de destination spécifique de la source pour encapsuler le paquet IP de multidiffusion spécifique de la source, adopter l'adresse de contrôle d'accès au support de destination spécifique de la source pour encapsuler le paquet IP de multidiffusion spécifique de la source ; et dans le cas contraire, adopter une adresse de contrôle d'accès au support de destination pour une source quelconque en tant qu'adresse de contrôle d'accès au support de destination pour encapsuler le paquet IP de multidiffusion spécifique de la source.

6. Procédé selon la revendication 5, dans lequel l'adoption de l'adresse de contrôle d'accès au support de destination spécifique de la source pour encapsuler le paquet IP de multidiffusion spécifique de la source consiste à :
déterminer s'il y a une adresse de contrôle d'accès au support de destination spécifique de la source correspondant à la paire d'adresses de source-groupe de multidiffusion du paquet IP de multidiffusion spécifique de la source ;
s'il y a une adresse de contrôle d'accès au support de destination spécifique de la source correspondant à la paire d'adresses de source-groupe de multidiffusion du paquet IP de multidiffusion spécifique de la source, adopter l'adresse de contrôle d'accès au support de destination spécifique de la source pour encapsuler le paquet IP de multidiffusion spécifique de la source ;
s'il n'y a pas d'adresse de contrôle d'accès au support de destination spécifique de la source correspondant à la paire d'adresses de source-groupe de multidiffusion du paquet IP de multidiffusion spécifique de la source, déterminer s'il est permis d'adopter l'adresse de contrôle d'accès au support de destination pour une source quelconque pour encapsuler le paquet IP de multidiffusion spécifique de la source sur la base de la configuration de l'interface de routage ;
s'il est permis d'adopter l'adresse de contrôle d'accès au support de destination pour une source quelconque pour encapsuler le paquet IP de multidiffusion spécifique de la source, utiliser l'adresse de contrôle d'accès au support de destination pour une source quelconque en tant qu'adresse de contrôle d'accès au support de destination,
encapsuler l'adresse de contrôle d'accès au support de destination pour une source quelconque dans le paquet IP de multidiffusion spécifique de la source ; et dans le cas contraire, rejeter le paquet IP de multidiffusion spécifique de la source.

7. Procédé selon l'une quelconque des revendications 1 à 5, consistant en outre à :
modifier ou interdire, sur le routeur, une vérification de relation correspondante entre l'adresse de contrôle d'accès au support de destination et une adresse IP de groupe de multidiffusion au niveau d'une interface de routage recevant le paquet Ethernet de multidiffusion acheminant des informations d'adresse de contrôle d'accès au support de destination spécifique de la source.

8. Système destiné à prendre en charge la réexpédition de multidiffusion spécifique de la source sur Ethernet comprenant :
un routeur, configuré pour utiliser une adresse de contrôle d'accès au support de destination spécifique de la source contenant une paire d'adresses de source-groupe de multidiffusion constituée d'une adresse IP de source et d'une adresse IP de groupe de multidiffusion en tant qu'adresse de contrôle d'accès au support de destination lors de l'encapsulation d'un paquet IP de multidiffusion spécifique de la source dans un paquet Ethernet de multidiffusion, et pour encapsuler l'adresse de contrôle d'accès au support de destination spécifique de la source dans le paquet Ethernet de multidiffusion ; et
un commutateur Ethernet, configuré pour réexpédier le paquet Ethernet de multidiffusion encapsulé en conformité avec l'adresse de contrôle d'accès au support de destination spécifique de la source.

9. Système selon la revendication 8, dans lequel le routeur et le commutateur Ethernet comprennent en outre respectivement une unité de stockage, configurée pour stocker une relation correspondante cohérente entre respectivement la paire d'adresses de source-groupe de multidiffusion, et l'adresse de contrôle d'accès au support de destination spécifique de la source ; et
le routeur comprend en outre une unité d'encapsulation d'adresse de contrôle d'accès au support de destination spécifique de la source, configurée pour utiliser l'adresse de contrôle d'accès au support de destination spécifique de la source contenant les informations concernant la paire d'adresses de source-groupe de multidiffusion en tant qu'adresse de contrôle d'accès au support de destination lors de l'encapsulation du paquet IP de multidiffusion spécifique de la source dans le paquet Ethernet de multidiffusion, et pour encapsuler l'adresse de contrôle d'accès au support de destination spécifique de la source dans le paquet Ethernet de multidiffusion ;
le commutateur Ethernet comprend en outre une unité de configuration de liste de ports de réexpédition, configurée pour déterminer l'adresse de contrôle d'accès au support de destination spécifique de la source correspondant à la paire d'adresses de source-groupe de multidiffusion contenue dans un paquet de liaison montante intercepté du protocole de gestion de groupe Internet sur la base du paquet de liaison montante du protocole de gestion de groupe Internet et de la relation correspondante entre la paire d'adresses de source-groupe de multidiffusion et l'adresse de contrôle d'accès au support de destination spécifique de la source, et pour configurer une liste de ports de réexpédition sur la base d'un identifiant de réseau local virtuel et de l'adresse de contrôle d'accès au support de destination spécifique de la source.

10. Système selon la revendication 9, dans lequel le commutateur Ethernet comprend en outre une première unité de jugement, configurée pour déterminer s'il est nécessaire d'adopter l'adresse de contrôle d'accès au support de destination spécifique de la source pour configurer la liste de ports de réexpédition en conformité avec une configuration de réseau local virtuel du commutateur Ethernet, et pour déclencher l'unité de configuration de liste de ports de réexpédition s'il est déterminé qu'il est nécessaire d'adopter l'adresse de contrôle d'accès au support de destination spécifique de la source pour configurer la liste de ports de réexpédition.

11. Système selon l'une quelconque des revendications 8 à 10, dans lequel le routeur comprend en outre une seconde unité de jugement, configurée pour déterminer s'il est nécessaire d'adopter l'adresse de contrôle d'accès au support de destination spécifique de la source pour encapsuler le paquet IP de multidiffusion spécifique de la source sur la base d'une configuration d'une interface de routage du routeur, et pour déclencher l'unité d'encapsulation d'adresse de contrôle d'accès au support de destination spécifique de la source s'il est déterminé qu'il est nécessaire d'adopter l'adresse de contrôle d'accès au support de destination spécifique de la source pour encapsuler le paquet IP de multidiffusion spécifique de la source.

12. Routeur destiné à prendre en charge la réexpédition de multidiffusion spécifique de la source, comprenant :
une unité d'encapsulation d'adresse de contrôle d'accès au support de destination spécifique de la source, configurée pour utiliser une adresse de contrôle d'accès au support de destination spécifique de la source contenant une paire d'adresses de source-groupe de multidiffusion constituée d'une adresse IP de source et de l'adresse IP de groupe de multidiffusion en tant qu'adresse de contrôle d'accès au support de destination lors de l'encapsulation d'un paquet IP de multidiffusion spécifique de la source dans un paquet Ethernet de multidiffusion, et pour encapsuler l'adresse de contrôle d'accès au support de destination spécifique de la source dans le paquet Ethernet de multidiffusion.

13. Routeur selon la revendication 12, comprenant en outre :
une unité de stockage, configurée pour stocker une relation correspondante entre la paire d'adresses de source-groupe de multidiffusion et l'adresse de contrôle d'accès au support de destination spécifique de la source.

14. Routeur selon l'une quelconque des revendications 12 et 13, comprenant en outre :
une unité de jugement, configurée pour déterminer s'il est nécessaire d'adopter l'adresse de contrôle d'accès au support de destination spécifique de la source pour encapsuler le paquet IP de multidiffusion spécifique de la source sur la base d'une configuration d'une interface de routage du routeur, et pour déclencher l'unité d'encapsulation d'adresse de contrôle d'accès au support de destination spécifique de la source s'il est déterminé qu'il est nécessaire d'adopter l'adresse de contrôle d'accès au support de destination spécifique de la source pour encapsuler le paquet IP de multidiffusion spécifique de la source.

15. Commutateur Ethernet destiné à prendre en charge la réexpédition de multidiffusion spécifique de la source, comprenant :
une unité de stockage, configurée pour stocker une relation correspondante entre une paire d'adresses de source-groupe de multidiffusion constituée d'une adresse IP de source et d'une adresse IP de groupe de multidiffusion, et une adresse de contrôle d'accès au support de destination spécifique de la source ;
une unité de configuration de liste de ports de réexpédition, configurée pour déterminer une adresse de contrôle d'accès au support de destination spécifique de la source correspondant à une adresse IP de source et à une adresse IP de groupe de multidiffusion contenue dans un paquet de liaison montante intercepté du protocole de gestion de groupe Internet sur la base d'un paquet de liaison montante de protocole de gestion de groupe Internet et de la relation correspondante entre la paire d'adresses de source-groupe de multidiffusion et l'adresse de contrôle d'accès au support de destination spécifique de la source, et pour configurer une liste de ports de réexpédition sur la base d'un identifiant de réseau local virtuel et de l'adresse de contrôle d'accès au support de destination spécifique de la source.

16. Commutateur Ethernet selon la revendication 15, comprenant en outre :
une unité de jugement, configurée pour déterminer s'il est nécessaire d'adopter l'adresse de contrôle d'accès au support de destination spécifique de la source pour configurer la liste de ports de réexpédition en conformité avec une configuration de réseau local virtuel du commutateur Ethernet, et pour déclencher l'unité de configuration de liste de ports de réexpédition s'il est déterminé qu'il est nécessaire d'adopter l'adresse de contrôle d'accès au support de destination spécifique de la source pour configurer la liste de ports de réexpédition.
